# EUROPEAN PATENT SPECIFICATION

(11) **EP 4 404 869 B1**
(45) Date of publication and mention of the grant of the patent: **14.01.2026**
(21) Application number: 22793709.1
(22) Date of filing: 22.09.2022
(51) Int. Cl.: A61C 17/20, A61C 1/16

(54) **COVERING ELEMENT FOR PROTECTING A TOOL TIP, ULTRASONIC DENTAL TOOL AND METHOD FOR CHECKING THE WEAR AND/OR FOR STERILIZING A TOOL TIP**
ABDECKELEMENT ZUM SCHUTZ EINER WERKZEUGSPITZE, ULTRASCHALLZAHNWERKZEUG UND VERFAHREN ZUR ÜBERPRÜFUNG DES VERSCHLEISSES UND/ODER DER STERILISATION EINER WERKZEUGSPITZE
ÉLÉMENT DE COUVERTURE DE PROTECTION D'UNE POINTE D'OUTIL, OUTIL DENTAIRE À ULTRASONS ET PROCÉDÉ POUR VÉRIFIER L'USURE ET/OU LA STÉRILISATION D'UNE POINTE D'OUTIL

(30) Priority: 23.09.2021 EP 21198659
(43) Date of publication of application: 31.07.2024
(73) Proprietor: Ferton Holding S.A., 2800 Delémont (CH)
(72) Inventor: ERENT, Julien, 1212 Grand Lancy (CH); BEANI, Florent, 01170 Gex (FR); CAHEN, Antoine, 1005 Lausanne (CH)
(74) Representative: Müller Schupfner & Partner Patent- und Rechtsanwaltspartnerschaft mbB (Muc)
(86) International application number: PCT/EP2022/076338
(87) International publication number: WO 2023/046823

(56) References cited:
- WO-A1-02/074160
- WO-A1-2020/104659

## Description

The present invention concerns a covering element for protecting a tool tip, an ultrasonic dental tool and a method for checking the wear of such tool tip and/or for sterilizing a tool tip.

It is well known that tool tips for dental treatments are very sharp. Therefore, it has become established to cover them in order to avoid any kind of injury of an operator using the tool or the tool tip.

The usual protections of needle-like objects are similar to the one used on syringe's needles. These protections are partially vented to allow sterilization but not enough opened to allow liquid penetration during cleaning and disinfection process (reprocessing). Also, these types of caps require both hands to remove the cap.

Tool tips of ultrasonic dental tools are usually protected by torque wrench elements such as is disclosed in WO 2020 104 655 A1 or WO 2020 104 659 A1, for example. The additional functions of those torque wrenches include tightening the instruments onto the handpiece at a controlled torque and holding the instruments during reprocessing phases. Especially, WO 2020 104 659 A1 includes a way of identifying a wear of the tool tip by taking a top view on the opening at the front side of the torque wrench, in particular by using a camera and/or software solution, which can be uploaded on a smart device, such as a smart mobile-phone. However, identifying the grade of wear is complicated in such a system, since the tool tip is curved/bended. Further, the positioning in the instrument cannot guarantee a precise and reproducible position of the tool tip.

However, the identification of a level of wear is essential for the use of a tool tip: Piezoelectric scalers are known to be less invasive and comfortable than other scaling method due to the linearity of its ultrasound (US) motion. The linearity of the US motion is ensured by its geometry and requires adjustment between the instrument and the electromechanical converter (transducer included into the handpiece): The flexural motion of the instrument must not be coupled with the longitudinal motion of the electromechanical converters, generating a mastered constant linear vibration.

To ensure a safe and comfortable treatment, as well as to improve the usable wear of the instrument (lifetime), the tool tip is configured with a given geometry to avoid any coupling with a transducer. For example, the maximum removal of the tool tip is 3 mm for a straight scaler tips and 2 mm for curved scaler tip. Beyond this limit, coupling between instrument and transducer occurs, resulting in a non-mastered motion with possible injury risk due to a non-under-control instrument motion.

In addition to mechanical perturbations, the electronic drive could have problems to drive it correctly due the apparition of a double impedance peak. In fact, when instrument and transducer frequencies are coupled, an impedance spectrum reveals two peaks with same amplitude and the electronic module could shift to one mode to another according to the local minimal value. The increase of impedance for coupled frequency could be also an issue for the electronic driver.

In addition to the coupled frequencies issue, another requirement to fulfill for the linearity of the motion (and the treatment safety / comfort) is the lack of parasitic motions during functioning due to geometry modification.

In fact, for ensuring the linearity of the motion, the instrument and transducer are designed to have a symmetry plane, in which the instrument vibrate in a flexural mode.

If the instrument geometry is modified during work or manipulation, this symmetry plane is not ensured and it could generate lateral motion (rotation, elliptic,..) avoiding the desired control of the tool tip. The lack of control induces parasitic motion and, at the end, even patient injury.

Therefore, the prior art knows several approaches to identify a grade of wear of a tool tip, being intended in a dental treatment device. One example is a plasticized cardboard card. However, such a card is not robust, i. e. it is easily bendable and tearable. Further, the instrument must be placed manually on the card. As a result, a precise measurement is not possible, since the position of the deposited tool tip can be different for each tool tip. Furthermore, the card can be lost, because it is not stored together with the tool tip.

According to another example of the prior art, a TiN coating is provided. However, such a coating is very thin such that it will be altered before the tool tip wear. As a consequence, the measurement does not correspond to the real wears. In an alternative approach, the tool tip includes a circularly engraved mark in the tool tip. However, such a laser engraving is very slight and will be fully removed before the tool tip is shorten about 2 mm.

Considering the above it is an object of the present invention to provide a system, which protects the tool tip and the operator of the tool tip and provides additional functionalities, which simplify the handling and use of the tool tip.

WO 02/074160 A1 discloses a covering element for a dental tool tip.

The problem is solved by a covering element according to claim 1, an ultrasonic dental tool according to claim 13 and a method for checking the wear and/or for sterilizing a tool tip according to claim 14. Preferred embodiments are incorporated in the dependent claims, the description and the figures.

According to a first aspect of the present invention a covering element for protecting a dental tool tip, in particular for protecting a needle like tool tip, such as a straight scaler tip of a ultrasonic dental tool, the tool tip being attachable to a handpiece for the dental treatment or being (permanent) part of the handpiece, is provided, wherein the covering element is removable from the tool tip and/or the handpiece and wherein the covering element is fixed to the tool tip or a part of the handpiece in a mounted state, the covering element comprising
- a cover section for covering the tool tip in the mounted state of the covering element and
- a fixing section for fixing the covering element to the tool tip and/or a part of the handpiece in the mounted state,
wherein the cover section comprises a window section for a preferably lateral view on the tool tip to check a wear of the tool tip and for flooding an interior space of the covering element with a fluid, in particular with a sterilization means.

Contrary to the prior art, the present invention suggests a window section for a lateral view on the tool tip. Instead of a top view, being directed to a front side opening of the covering element, the window section is incorporated into a sidewall of the cover section surrounding the needle like tool tip according to the invention. This also allows, especially in case of the needle-like tool tip, to arrange the window section comparably close to the needle-like tool tip. This improves the accuracy of checking the wear. Furthermore, the window section allows to flood an inside of the covering element with a fluid. Said window section includes at least one opening in the cover section for flooding the interior space of the covering element with a fluid, the fluid being used for example for sterilization of the needle, via the window section, while the fluid exits at the front side opening of the covering element, especially of the cover section. Thus, a fluid stream can be established, which passes the installed tool tip. In particular, it is provided that the windows section has a sufficient size for flooding. Especially, it is conceivable that the size of the window section. i.e. its area, is larger than a size of an exit opening, through which the sterilization means exits the covering element after entering the covering element via the windows section. The exit opening might be at a front side of the cover element.

The cover section includes preferably a sidewall, forming a sleeve and/or surrounding the tool tip in the mounted state. Preferably, the covering element extends along an main extension direction, being parallel to the extension direction of the tool tip in the mounted state. Especially, the covering element has its maximum length along the main extension direction, while a width of the covering element is measured in a plane being perpendicular to the main extension direction. A ratio of the width, in particular a maximum with, to the maximum length is preferably smaller than 0.5, preferably smaller than 0.4 and most preferably smaller than 0.25. As a result, it is possible to arrange the window section comparatively close to the tool tip.

The window section is preferably formed as a spatial limited area along a circumferential direction in a cross section being perpendicular to the main extension direction of the covering element. In particular, the covering element has a central axis, extending essential parallel to the main extension direction. The side wall forming the covering element surrounds the central axis along the circumferential direction in a plane perpendicular to the main extension direction. Along a circumferential direction the windows section is limited to a section, in particular curved section, of the whole circumference in a plane perpendicular to the central axis/main extension direction, the extension of the window section being smaller than 360°/n, wherein n is greater than 10, preferably greater than 15 and more preferably greater than 20 along the circumferential direction. Thus a very narrow, slit like window section is created, which mainly extends parallel to the straight needle like tool tip along an axial direction being parallel to the main extension direction. As a result of the narrow window section, the perspective of the operator is determined. This supports the reproducibility of checking the wear. As a result, errors occurring by a wrong perspective can be avoided.

In particular, it is provided that the window section is included in a sidewall of the covering element surrounding the inserted tool tip. Preferably, the window section forms a part of the covering element. In particular, the window section forms less than 50 %, preferably less than 30 % and more preferably less than 15 % of the volume of the covering element or the surface of the covering element. Preferably, the covering element comprises a windows section and a non-window section, the non-window section surrounding the window section, particularly completely. While the window section allows visual access to the mounted tool tip, the non-window section is formed by a non-transparent material. The non-windows section might comprise a profiled outer surface for supporting a grip of the operator. If the window section is formed by a transparent or semi-transparent material it is preferably provided that the window section is recessed to the outer surface of the non-window section. Thus the probability is reduced that the operator touches the window section.

It is also conceivable that the window section is at least partially formed by a material being more transparent than the rest of the cover section. Thus, it is possible to see the tool tip being surrounded by the cover section. For example, the window section is filled by glass or a transparent plastic. Furthermore, it is provided that the sidewall of the cover section is spaced from the toot tip in the mounted state of the covering element. The distance between the side wall and the tool tip is more preferably smaller than 2 cm, preferably smaller than 1,5 cm and most preferably smaller than 0,75 cm.

In particular, the covering element has a mainly sleeve like shape. Especially, the cover section is formed for surrounding the needle like tool tip. For example, the cross section being perpendicular to the main extension direction of the covering element might have a circular, elliptic, rectangular and/or polygonal shape. According to a preferred embodiment, the window section includes at least one opening in the cover section for flooding the interior space of the covering element with a fluid, in particular a sterilization means. The fluid might be a liquid or a gas.

The lateral arrangement of the window section allows direct visual access to the tool tip and allows in particular using it for inserting a sterilization means into the covering element for sterilization. Thus, it is possible to sterilize the tool tip in a simple way without removing the covering element. Especially, such a sterilization mechanism can be supported by using the front side opening as an exit for the sterilization means. Especially it is possible to create a fluid stream which passes the tool tip. A storing or accumulation of sterilization means inside the covering element can avoided by this. Instead the fluid can circulate through the covering element .

Preferably, the covering element is configured for pulling it over the tool tip by a translational mounting movement, in particular without any kind of rotational movement, wherein the covering element is in particular configured to form a force fitting connection, such as a clamp connection, between the fixing section and the tool tip and/or the part of the handpiece at the end of the mounting movement. The force fitting is preferably acting along a direction, being parallel to the direction of the translational mounting movement. In other words: The covering element can be pulled over the installed tool tip by a translational movement, i. e. straight movement including no rotational movement component and can be moved until a force fitting is established for fixing the covering element to the handpiece. In particular, a pressfit connection between the covering element and the tool tip and/or the handpiece is realized.

The frictional force, being generated, fixes the covering element to the handpiece / tool tip. Thus, it is possible to attach the covering element to the handpiece and to fix it by a simple movement.

In an alternative, it is also conceivable that a ratchet mechanism or a screwing mechanism is used for attaching the covering element to the handpiece. For example, it might be reasonable to use a thread at a head section of the moving part of the ultrasonic dental tool for screwing the covering element to the handpiece. Alternatively, it is also conceivable that a bajonett like mechanism is used for attaching the covering element to the handpiece. However, configuring the covering element such that a simple translational movement (without rotation) and a frictional fitting is generated, simplifies the handling for attaching the covering element significantly.

Preferably, the covering element is configured such that the window section is located at the same place relative to the handpiece after each mounting process. In other words: the covering element is mounted and automatically the window section is always at the same place relative to the handpiece. This applies for both, the orientation along a direction being parallel to the main extension direction of the covering element and preferably corresponding to a direction of the mounting movement, on the one hand and the rotational orientation of the window section with respect to the handpiece on the other hand.

Preferably, the covering element includes a stop element for stopping the translational mounting movement at the end of the mounting process. For example an end region of the cover section, the end region being connected to the fixing section of the covering element, is used as a stop element, the movement of which is stopped by a part of the handpiece, in particular its shaft being located proximal to the interface section having the tool tip. Such a stop element can be used as a reference point, which guarantees that the covering element is arranged at the same place for each attachment/mounting process, since the stop element is arranged at the same position adjacent to a certain and preferably defined part of the handpiece. As a result, the relative arrangement between the window section and the tool tip is determined in a defined way for guaranteeing a reproducible way of checking the wear of the tool tip.

Furthermore, it is provided that the covering element is configured to be removable by a translational removing movement, in particular without any rotation and/or by a movement in a direction being directed to the distal end of the tool tip. Thus, it is possible to remove the covering element, especially without using two hands. For example, it is possible to use a thumb of the operator to press at a front side of the covering element for removing the covering element by pushing it from the handpiece. This significantly simplifies the handling of the covering element in a removing process of the covering element. Furthermore, the removing process can be accelerated, since no complicated mechanism has to be performed for removing it. Preferably, it is provided that the covering element is configured such that a force, acting on the covering element, has to overcome a threshold for removing the covering element to guarantee that the covering elements stay fixed at the handpiece and/or tool tip.

In particular, the cover section is made from a first material and the fixing section is made from a second material, the first and the second material being different from each other. As a result, the materials can be adapted to their functions. For example, it might be reasonable to use a first material being not transparent or having at least a transparency being smaller than the transparency of the window section for providing a reference during the checking process. The second material is preferably made from a more elastic material compared to the first material such that an elastic force can support the frictional fitting being established in the mounted state between the covering element and the handpiece. Furthermore, such an elasticity realizes a more comfortable contact for the operator during the removing process. For example, the first material is a metal while the second material is preferably a rubber material and/or a specific plastic material. The second material is preferably a non-metal material.

Preferably, it is provided that the cover section has a front side opening. The front side opening can preferably be used for exiting a fluid, which is used for sterilization of the tool tip, being located inside the covering element in the mounted state.

Preferably, the fixing section has a receiving area for receiving a part of the handpiece during the mounting movement. Especially, the receiving area is configured for determining the position, in particular the rotational orientation of the covering element relative to the handpiece and/or the tool tip. Furthermore, it is provided that the receiving area receives for example a shaft element of the handpiece, for example of the moving part of a dental ultrasonic tool. Preferably, the receiving area and the handpiece interact with each other such that the covering element is guided by the part of the handpiece during the mounting process. For example, the receiving area has at least two side walls being parallel to each other to define a direction for the translation mounting movement. Especially, the receiving area is a slit, being realized at the front side of covering element in the fixing section.

Preferably, it is provided that the cover section includes a reference for checking the wear of the tool tip. Such a reference might be a reference line, which can be used for identifying the current length of the tool tip, being an evidence of the wear of the tool tip. Alternatively, the reference is an arrow, a point or another visualization. For example, the reference is an engraving, being realized at the outside of the cover section. However, the reference might be also some wire which crosses the window section. Alternatively, the reference sign is integrated in an inner side of the side wall forming the cover section, the reference in the side wall being opposite to the window section. In other words: the operator looking on the window section sees both the tool tip and the reference, which is located at the inner sidewall being behind the tool tip.

Preferably, it is provided that the fixing section has an inner side being at least partially funnel like. As a result, the funnel like area, preferably at the front end region of the fixing sections, simplifies the entering of the tool tip into the inside of the covering element during a mounting process.

Preferably, it is provided that a rib element is included in the fixing section, the rib element protruding from an inner side of the fixing section, preferably to the centre axis of the covering element. The extension of the protruding rib element is directed to the centre of the inside of the fixing section. The rib elements interact with the interface section or the tool tip for guiding and/or fixing the covering element to the handpiece. Using the rib elements decreases the resistance during the mounting process and simplifies the radial positioning during the mounting process. Preferably, the fixing section has at least n rib elements such that the rib elements are preferably located in a circumferentially direction each 360°/n, n being an integer number. Preferably n is smaller than 8, more preferably smaller than 5 and most preferably 3. Alternatively, it is also conceivable that the n rib elements are distributed along the circumferentially direction in a non-equidistant way.

In particular, it is provided that the rib element comprises at least one protrusion (protruding from the rib element). In other words, the protruding rib element in turn has another protrusion. This protrusion is formed as at least one bass or bulge. Especially this bass or bulge, i.e. the protrusion, determines the frictional force, which has to be applied for removing the covering element from the handpiece and/or fixing the covering element to the handpiece. However, it is also possible that the at least protrusion is formed by a part of a spring such as a leaf spring.

Preferably, it is provided that the cover section includes at least two openings being opposite to each other. Especially the opposite positioning of the window section allows orientation the whole assembly of the handpiece having the covering element until the both window sections are flush to each other. As a result, a defined perspective or view is guaranteed for checking the wear of the tool tip. This further increase accuracy of determining the wear of the tool tip. Preferably, the two openings have the same shape.

Preferably, it is provided that the at least one opening and/or the at least two openings are slots. Using slots is of advantage, especially in case of a needle like tool tip, since the slot can be extended over the whole relevant region of the tool tip for checking the wear.

Another subject matter of the present invention is an ultrasonic dental tool, wherein a covering element according to the present invention is attached to the ultrasound dental tool. All benefits and specifications being discussed in content of the covering element also applies for the ultrasonic dental tool.

Preferably, the ultrasonic dental tool comprises a stop element for stopping the translational mounting movement. Thus, a contact is realized ,which establishes a defined and determined positioning of the covering element relative to the handpiece for guaranteeing an accurate and reproducible determination of the wear without a relative shifting between the covering element and the handpiece. Especially, the stop element of the handpiece and the stop element of the covering element are located direct next to each other after the mounting process.

Another subject matter of the present invention is a method for checking a wear of a tool tip and/or sterilizing the tool tip, comprising:
- attaching the covering element of the present invention to the tool tip or a handpiece having a tool tip, and
- checking a wear of a tool tip and/or sterilizing the tool tip. All benefits and specifications being discussed in content of the covering element also applies for the method.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates an ultrasonic dental tool in a side view,
- **Fig. 2**: shows a sectional view through a covering element according to a preferred embodiment of the present invention in a mounted state,
- **Fig. 3**: shows three perspective views of the covering element of Fig. 2 in a non-mounted state,
- **Fig. 4**: shows two side views of the covering element of Fig. 2 in a mounted state
- **Fig. 5**: illustrates a mounting and removing movement of the covering element of Fig. 2 and
- **Fig. 6**: shows a detail view of an inside of the covering element of Figure 2.

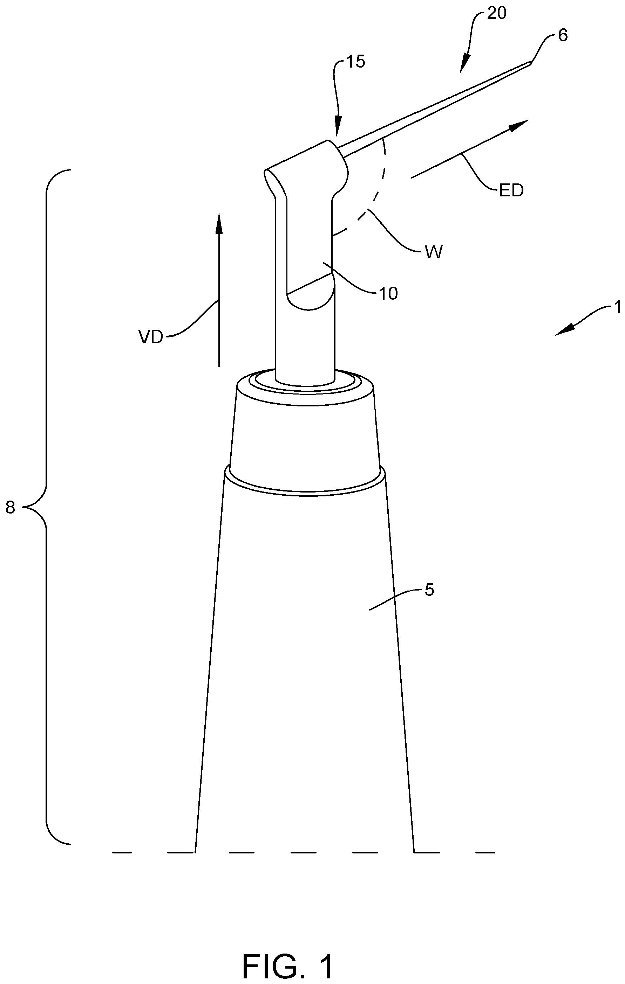

In **Figure 1** a tool 1 for a medical treatment according to a first preferred embodiment is schematically shown in a side view. Especially, figure 1 illustrates an ultrasonic dental tool 1, in particular a scaler for removing dental calculus. Such a tool 1 uses a vibration movement, in particular an ultrasound vibration movement for moving a tool tip 20 such that the tool tip 20, located at or next to dental calculus at a tooth, removes said dental calculus from the tooth being treated during operation. Preferably, the tool 1 includes a vibration source (not shown), in particular an ultrasound vibration source, being intended to cause the ultrasound vibration movement along a vibration direction VD. Especially, the vibration source includes at least one piezo element. These piezo elements are typically configured such that an electrical energy can be translated to a small expansion of the piezo element in vibration direction VD that creates the ultrasound vibration movement.

In particular, it is provided that the tool 1 further comprises a moving part 10 and a tool tip 20. In particular, the moving part 10 represents a sonotrode or horn. Thereby, the tool tip 20 represents in figure 1 the scaler that interacts with a surface of a tooth, in particular its outside, during a treatment. Especially, the tool tip 20 is formed as a non-bent component. In other words: the tool tip 20 in form of a needle, i. e. the tool tip 20, has a straight course along the extension direction ED from an inserting section of the tool tip 20, the inserting section being inserted into a recess in an interface section 15 of a handpiece 8, in particular of the moving part 10, to a pointed tip or distal end 6 of the tool tip 20. Especially, straight means that a curvature is smaller than 0.1 1/m, preferably smaller than 0.05 1/m and most preferably smaller than 0.01 1/m. As a consequence, the tool tip 20 differs from the scaler tips known by the prior art that are typically bent for meeting the requirement that the rear end (seen from the vibration source) or distal end of the tool tip 20 needs to be extended slanted about an angle W of about 120° to the vibration direction VD, in particular for meeting the requirements that are defined by an oral cavity geometry.

However, instead of using a screw section, which allows connecting the tool tip 20 to the moving part 10 by a screw mechanism, it is preferably provided according to the embodiment shown in figure 1 to connect the tool tip 20 to the moving part 10 in the interface section 15, in particular without a screwing mechanism. Preferably, the tool tip 20 is connected to the moving part 10 in the interface section 15 by a frictional-fitting and/or form-fitting, in particular without a screwing mechanism. Especially, the tool tip 20 is connected to the interface section 15 of the moving part 10 by a press fit connection. Depending on a strength of the press fit, the tool tip 20 is arranged or connected to the moving part 10 permanently or non-permanently, for example.

Further, the tool tip 20 extends in an extending direction ED being slanted to the vibration direction VD in the interface section 15. It turned out that by connecting a non-bent tool tip 20 such to the moving part 10 that the tool tip 20 extends slanted to the vibration direction VD of the moving part 10, it is possible to transfer the vibrational movement from the moving part 10 to the tool tip 20 in a more efficient way, compared to those scalers having a screw section for screwing the tool tip 20 to the moving part 10 of the tool.

Another benefit of using a non-bent, i. e. needle-like, tool tip 20 is the possibility of relying on new or different materials that, for example, are not able to be bent in a way sufficient to realize a bent tool tip 20 in form of a scaler known from the prior art. Preferably, the extending direction ED and the vibration direction VD of the tool 1 having the non-bent tool tip 20 form an angle W that mainly corresponds to 120°, for meeting the requirements, being defined by the oral cavity geometry.

Preferably, a length of the needle like tool tip 20 depends on the application. For example, the length of the tool tip 20 is 20 mm for a universal tip (sub- and supragingival), but could be longer or shorter depending of the application for example shorter for high amplitude supragingival tip for example (around 14mm).

The handpiece 8 of the dental tool 1 includes in addition to the moving part 10 also a handling section 5, relative to which the moving part 10 performs his vibration or oscillation movement. The handling section 5 is intended to be gripped by the operator and is mainly formed by a housing, which surrounds the vibrational source as well as electronic components being used by the dental tool 1. At a front side of the handling section 5, the moving part 10 reaches out. For providing the operator an individual and comfortable grip at the handling section 5, the diameter of the housing of the handling section 5 increases, starting from the front side, which includes the moving part 10, which reaches out the handling section 5.

For protecting both the operator and the tool tip 20, the present invention suggests a covering element 30. However, such a covering element 30 could be also used for other tool tips 20 having different geometries and/or dimensions.

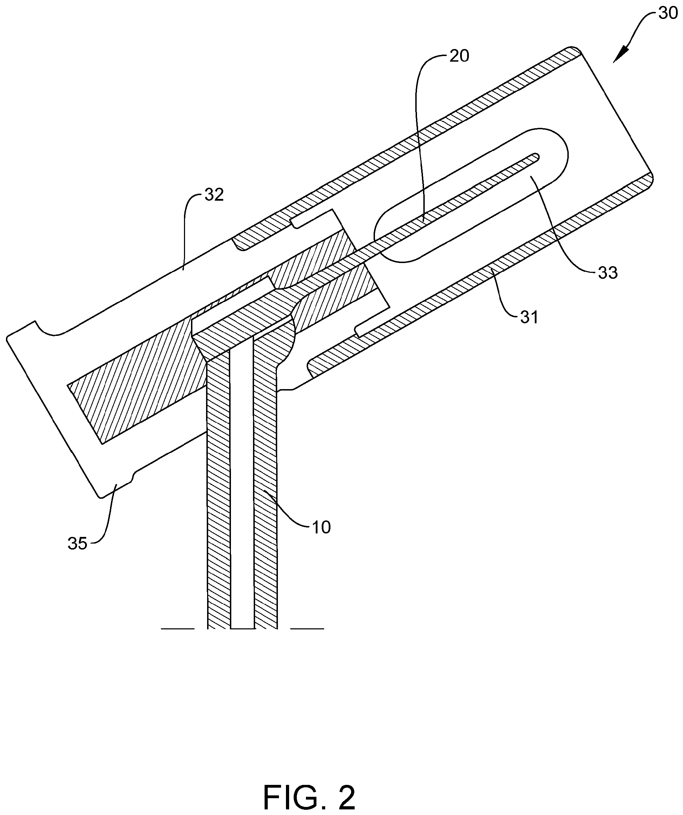

In **Figure 2****,** a covering element 30 of the present invention according to a preferred embodiment is illustrated, the covering element 30 being attached to the tool in a mounted state as pictured. In particular, it is provided that the covering element 30 has a cover section 31 for covering the tool tip 20 in a mounted state of the covering element 30 and a fixing section 32 for fixing the covering element 30 to the tool tip 20 and/or a part of the handpiece 8 in the mounted state. In figure 2, the mounted state of the covering element 30 is shown and the covering element 30 is attached to the moving part 10 of the dental tool 1. Especially, the moving part 10, in particular its distal end or head section, which includes the interface section 15, is at least partially or completely surrounded by the covering element 30.

Preferably, it is provided that the interface section 15 has a cylindrical shaped head section at the distal end of the moving part 10 and/or the moving part 10 has a shaft section, the shaft section preferably having plane side walls, which are parallel to each other. Preferably, the covering element 30 is connected to the distal end of the moving part 10, in particular to the interface section 15 being intended for receiving the tool tip 20. Especially, the covering element 30 can be pulled over the head section or the distal end of the moving part 10 and especially is connected to the cylindrical shaped head section by a frictional fitting force. For example, the connection between the handpiece 8 and the covering element 30 is realized by a press fit connection.

In addition, of the functionality of protecting the operator and/or the tool tip 20, the covering element 30 provides an additional functionality, namely the possibility to check the wear of the tool tip 20. For checking the wear of the tool tip 20, a window section 33 is incorporated into the cover section 31 of the covering element 30. This window section 33 is located in the cover section 31 such that a lateral view on the tool tip 20 is possible. Preferably, it is provided that the window section 31 is restricted to a defined or determined section of the circumference of the covering element 30. In other words: along a circumferential direction an extension of the window section 31 or the windows section 31 is limited to a region or regions extending about an angle of 360°/n, wherein n is larger than 5, preferably larger than 10 and most preferably larger than 15. In the mounted state of the covering element 30 the circumferential direction surrounds the tool tip 20, in particular in a plane being perpendicular to the extension direction ED of the tool tip 20 or a main extension direction of the covering element 30, being defined by the direction of maximum extension of the covering element 30.

As a result of this restriction, the perspective of the lateral view on the tool tip 20 can be defined. This improves the accuracy of determining the wear, since checking the wear or checking the length of the tool tip 20 is only influenced by a comparably small shift of the perspective. In contrast to that, a checking from a perspective being perpendicular to the extension direction ED of the tool tip 20, i. e. in a top view perspective on the tool tip 20, cannot guarantee such a defined and determined perspective.

In the embodiment illustrated in figure 2, the window section 33 is provided by at least one opening being included in the covering element 30. For example, the window section 33 is formed by an opening. The cover section 31 is preferably made from a material, being not transparent or has at least a different transparency compared to the transparency of the window section 33. This supports the determination of the perspective for checking the wear of the tool tip 20. Preferably, the window section 33 is realized as an elongated window such as a slot like opening. However, it is also possible that the window section 33 is made from glass or filled with a transparent material. Alternatively, it is conceivable that the opening can be covered at least for some time.

The covering element 30, in particular its fixing section 32, is connected to the moving part 10 of the handpiece 8. In the illustrated embodiment of figure 2, the cover section 31 and the fixing section 32 are stuck or interlocked into each other. In other words, the fixing section 23 extends into the cover section 31. Furthermore, it is provided that a first material of the cover section 31 is different from the second material of the fixing section 32. For example, the cover section 31 is made from a non-transparent material, especially a metal, while the fixing section 32 is made for example from a rubber or plastic material, giving the operator a comfortable feeling, when he contacts the fixing section 32.

Furthermore, the fixing section 32 includes a collar region 35, being arranged at a front side of the covering element 30. This collar region 35 increases the cross section measured in a direction being perpendicular to the main extension direction, being in the mounted state of the covering element 30 essentially parallel to the extending direction ED of the tool tip 20. Especially the collar region 35 increases towards to a front side of the covering element 30. Thus, a potential contact surface, which can be used by the operator for removing the covering element 30 is increased, which simplifies the handling and the removing of the covering element 30, as it will be discussed later in more detail.

The covering element 30 is preferably formed cylindrically and is especially formed as sleeve. However, it is also conceivable that the cross section being measured perpendicular to the main extension direction of the covering element 30 is of rectangular or polygonal shape.

Furthermore, it is provided that the covering element 30 is configured such that for pulling the covering element 30 over the interface section 15 of the moving part 10 the covering element 30 can be shifted by a translational mounting movement M until the covering element 30 abuts at a stop element of the handpiece 8. For example, the covering element 30 can be shifted as long as the mounting movement M until it is stopped, when the cover section 31 abuts a part of the handpiece 8, such as the shaft of the moving part 10, for example in a section being below or adjacent the interface section 15 of the moving part 10. Therefore, it is possible to define a reproducible positioning of the covering element 30 relative to the moving part 10. As a consequence, the position of the tool tip 20, relative to the window section 33, is determined and always the same. Thus, it is guaranteed that checking the wear of the tool tip 20 cannot be affected by a misalignment of the window section 33 relative to the handpiece 8 or tool tip 20. This improves the correct determination of the length of the tool tip 20, the length of the tool tip 20 being used as a grade for the wear of the tool tip 20.

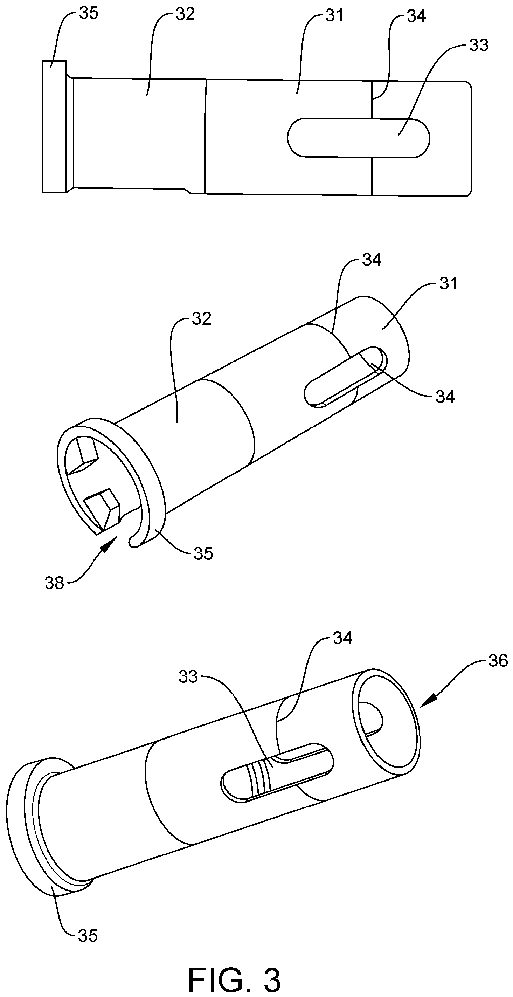

In **Figure 3****,** three perspective views on the covering element 30 are illustrated. Especially, the figures show a reference 34, being incorporated into the covering element 30, for example on its outside. This reference 34 can be used for defining a threshold for those tool tips 20, which can still be used. Especially, the reference 34 is realized as circumferential or perimeter line at an outside of the covering element 30. Preferably, this reference 34 is realized as an engraving having a corresponding long-life time. However, it is also possible to use a window section 33 being filled with a material, such as glass, such that the reference 34 can be directly established on or in the window section 33, for example as imprint. It is also conceivable that an (integrated) wire crosses the window section 33 for using it as a reference 34.

In the embodiment, illustrated in the figure 3, the window section 33 includes at least two openings being located opposite to each other. By using two window section openings being located directly opposite to each other, it is possible to orientate those openings until they are arranged flush to each other from a certain perspective. This supports finding the proper perspective for checking the wear of the tool tip 20. In addition to the lateral openings being intended for checking the wear, it is also provided that the covering element 30 includes a front side opening 36. By using this front side opening 36 it is also possible to flood an inside of the cover element 31, especially by entering a fluid into one of the at least one openings, being also used for the lateral view for checking the wear. The fluid can exit the inside of the covering element 30, in particular the cover section 31, via the front side opening 36. Alternatively, the fluid enters the front side opening 36 and exits the openings at the lateral side of the cover section 31. As indicated in the picture in the middle of figure 3, the fixing section 32 includes a receiving area 38, which is intended to receive a part of the handpiece 8, especially the moving part 10. In particular, it is provided that the inner side of the fixing element 32 is adapted to receive the interface section 15 of the moving part 10 being intended to connect the tool tip 20 with the handpiece 8. In case of a cylindrically shaped head section of the moving part 10 or interface section 15, the inner side of the fixing section 32 also has a mainly cylindrical shaped inner side wall. In other words: the shape of the inner side of the fixing section 32 is adapted to the outside shape of the interface section 15 of the handpiece 8. The receiving area 38 in the embodiment of figure 3 is formed as a slit, the width of which is adapted to the width of the moving part 10 in its shaft section.

This section of reduced thickness of the moving part 10, i. e. the shaft section, is result of the manufacturing process of the moving part 10. By dimensioning the slit length measured in a direction of a main extension direction such that it is at least twice, preferably three times and more preferably 3.5 times larger than a maximum diameter of the moving part 10, it is possible to fully insert the moving part 10 or the interface section 15 of the moving part 10 inside the fixing section 32. By using a slit as a receiving area 38, it is further possible to define an orientation of the covering element 30 relative to the handpiece 8, since the covering element 30 can only be pulled on the handpiece 8 in one defined manner. Furthermore, it is provided that only one single receiving area 38 is provided, especially only one slit like receiving area 38.

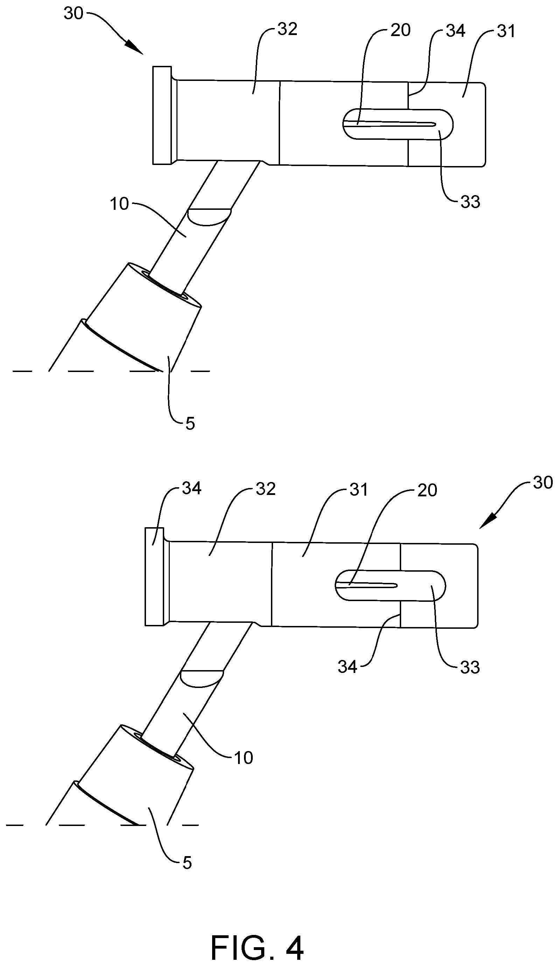

In **Figure 4** the two pictures show the covering element 30 being mounted on the handpiece 8 in two situations. The first situation on the left side illustrates a tool tip 20 having a length, which guarantees proper functionality of the dental tool 1, when the vibration starts to move the tool tip 20.

On the right side of figure 4, the tool tip 20 has a length being too short. As a consequence, the distal end of the tool tip 20 is located on the left side of the reference 34, such that the operator is informed about a length, which cannot guarantee a proper and comfortable use of the ultrasonic dental tool 1. In this case the tool tip 20 should be removed or changed or alternatively the dental tool 1 should be changed.

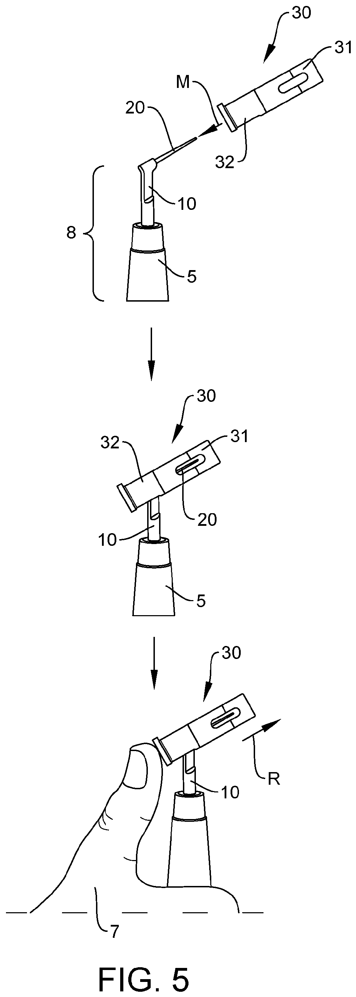

In **Figure 5****,** a mounting and a removing of the covering element 30 is illustrated. On the left side of this illustration, it is shown that the covering element 30 is moved along a translational mounting movement M, being essentially parallel to the extension direction ED of the straight needle like tool tip 20 or the main extension direction of the covering element 30. Actually, the direction for the mounting movement M corresponds to the direction along which the tool tip 20 extends, when it is inserted into the interface section 15, i. e. when it is mounted. This mounting movement M is performed until the translation mounting movement M of the covering element 30 is stopped by the handpiece 8. Thus, the operator installs the covering element 30 in a defined and determined position for checking the status of wear. For using the tool tip 20 and the ultrasonic dental tool 1 the covering element 30 has to be removed again. Removing the covering element 30 can be realized by a translational removing movement R being opposite to the mounting movement M and being especially antiparallel to the mounting movement M. In particular, it is provided that a force fitting connection between the covering element 30 and the moving part 10 of the handpiece 8 is realized after finishing the mounting movement M. Preferably, the second material of the fixing section 32 is configured such that the covering element 30 is clamped to the handpiece 8. In particular, a frictional fitting along a direction being parallel to the mounting movement M is established by the interaction between the handpiece 8 and the covering element 30.

As a result, it is possible to remove the covering element 30 by establishing a force, which overcomes the frictional force, established by the friction fitting between the covering element 30 and the handpiece 8, especially the moving part 10 of the handpiece 8. In particular, the material composition of the covering element 30 supports the friction fitting force, which is established for fixing the covering element 30 at the handpiece 7. For example, a material having a specified elasticity is used for adapting the desired force frictional connection. Thus, the threshold can be adjusted for removing the covering element 30.

Furthermore, it is possible to remove the covering element 30 by using a thumb of an operator. Thus, it is possible to remove the covering element 30 by using only one hand of the operator instead of using both for removing the covering element 30. The collar region 35 or the region of the fixing section 32 supports the handling during the removing movement R, since it provides an optimized contact surface for the thumb for removing the covering element 30.

Furthermore, at a front side opening of the covering element 30, especially of the fixing section 32, there is funnel like area in the inside of the fixing section 32, preferably starting at the collar region 35. Thus, a recess or dip is formed, which is optimally adapted to the thumb for removing the covering element 30, since the thumb can at least partially reach into the front side opening of the fixing section 32. This makes a comfortable use available for the operator for removing the covering element 30.

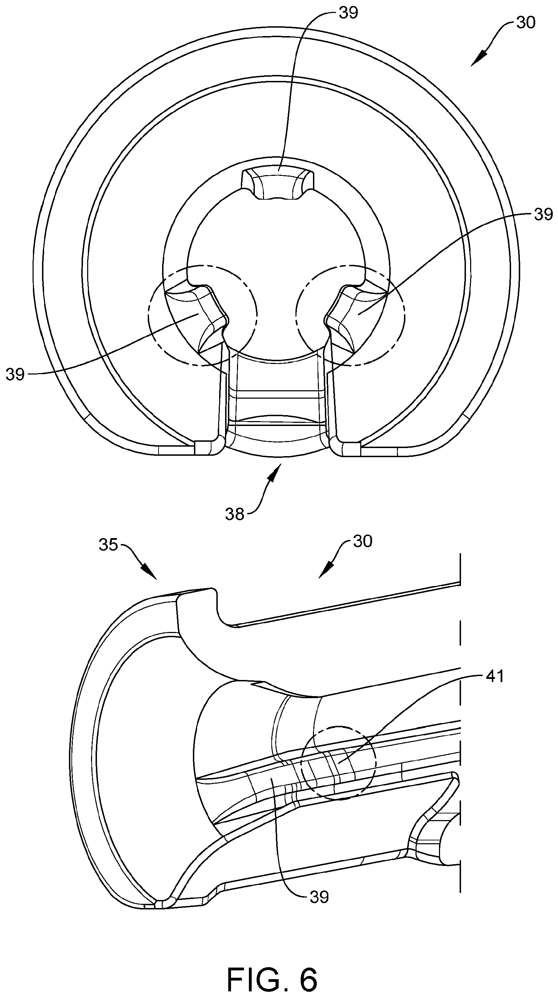

In **Figure 6** cross sections of the fixing section 32 of a covering element 30, according to the embodiment of the previous figures 2 to 5, are illustrated. Especially the cross section being shown at the top of figure 6 shows a cross section being mainly perpendicular to the main extension direction of the covering element 30. It is shown that the fixing section 32 includes a covering region 30 having a slot like or slit like geometry for guiding the covering element 30 during a mounting process. During the mounting process this receiving area 38 is guided or tracked by the shaft of the moving part 10, especially a part of the shaft having a reduced diameter and especially having plane side walls being parallel to each other. As a result, it is possible that the plane side walls of the moving part 10 determine the direction of the mounting movement M and/or the removing movement R at least partially. Furthermore, the top cross section shows three rib elements 39 protruding radially to a centre in the inside of the fixing section 32. These rib elements 39 contact the interface section 15, especially the cylindrically shaped head section, of the moving part 10 in the mounted state. In the present or illustrated embodiment, these thee rib elements 39 are separated in an equidistance manner from each other along the circumferential direction. Especially, it is provided that between two adjacent rib elements 39 the receiving area 38 is arranged seen along the circumferential direction.

The cross section illustrated at the bottom of figure 6 shows a cross section extending mainly parallel to the main extension direction of the covering element 10. The cross section especially shows that there is a funnel like area at the front side of the covering element 30 having the fixing section 32. This funnel like area starts in the region of the collar region 35 and extends into a region in which the rib element 39 formation starts. Especially the rib elements 39 have at least one ramp like region. Both, the funnel like area as well as the ramp region of the rib elements 39 support the guidance of the tool tip 20 and/or of the head of the moving part 10 or the interface section 15, in particular of the cylindrically formed head of the moving part 10. In addition, the rib element 39 has preferably at least one protrusion 40 being directed to the centre of the cross section being perpendicular to the main extension direction. The protrusion 40 determines the force being necessary to overcome for removing or finally fixing the covering element 30 to the handpiece 8, especially to the interface section 15 of the handpiece 8. Preferably, all or at least a plurality of the rib elements 29 being directed to the centre of the inside of the fixing section 32 have a protrusion 40 being located in the axial direction at the same distance from the front side opening.

It is also conceivable that instead of force fictional connection between the interface section 15 a ratchet or bajonett mechanism is used for positioning the covering element 30 at the handpiece 8.

### Reference list:

- 1: tool
- 5: handling section
- 6: distal end of the tool tip
- 7: hand
- 8: handpiece
- 10: moving part
- 15: interface section
- 20: tool tip
- 30: covering element
- 31: cover section
- 32: fixing section
- 33: window section
- 34: reference
- 35: collar region
- 36: front side opening
- 38: receiving area
- 39: rib element
- 40: protrusion
- VD: vibration direction
- ED: Extension direction W angle

## Claims

1. A covering element (30) for protecting a dental tool tip (20), in particular for protecting a needle like tool tip, such as a straight scaler tip of a ultrasonic dental tool (1), the tool tip (20) being attachable to a handpiece (8) for the dental treatment or being part of the handpiece (8), wherein the covering element (30) is removable from the tool tip (20) and/or the handpiece (8) and wherein the covering element (30) is fixed to the tool tip (20) or a part of the handpiece (8) in a mounted state, the covering element (30) comprising
- a cover section (31) for covering the tool tip (20) in the mounted state of the covering element (30) and
- a fixing section (32) for fixing the covering element (30) to the tool tip (20) and/or a part of the handpiece (8) in the mounted state,
wherein the cover section (31) comprises a window section (33) for a view on the tool tip (20) to check a wear of the tool tip (20) and for flooding an interior space of the covering element (30) with a fluid, in particular with a sterilization means,
**characterized in that** for a lateral view on the tool tip the window section (33) is incorporated into a sidewall of the cover section (31) and that the window section (33) includes at least one opening in the cover section (31) for flooding the interior space of the covering element (30) with a fluid, in particular a sterilization means.

2. The covering element (30) according to claim 1, wherein the covering element (30) is configured for being pulled over the tool tip (20) by a translational mounting movement (M) and wherein the covering element (30) is particularly configured to realize a force-fitting connection between the fixing section (32) and the tool tip (20) and/or a part of the handpiece (8) at the end of the mounting movement (M).

3. The covering element (30) of claim 2, wherein the covering element (30) includes a stop element for stopping the translational mounting movement (30) at the end of a mounting process.

4. The covering element (30) according to one of the preceding claims, wherein the covering element (30) is configured to be removable by a translational removing movement (R), in particular without a rotation and/or by a translational removing movement (R) in a direction being directed to the distal end (6) of the tool tip (20).

5. The covering element (30) according to one of the preceding claims, wherein the cover section (31) is made from a first material and the fixing section (32) is made from a second martial, the first material and the second material being different from each other.

6. The covering element (30) according to one of the preceding claims, wherein the cover section (31) has a front side opening (36).

7. The covering element (30) according to one of the preceding claims, wherein the fixing section (32) has a receiving area (38) for receiving a part or the handpiece (8) during the mounting movement (M).

8. The covering element (30) according to one of the preceding claims, wherein the cover section (31) includes a reference (34) for checking the wear of the tool tip (20).

9. The covering element (30) according to one of the preceding claims, wherein the fixing section (32) has an inner side being at least partially funnel like.

10. The covering element (30) according to one of the preceding claims, wherein the fixing section (32) comprises at least one rib element (39), protruding from an inner side of the fixing section (32).

11. The covering element (30) according to claim 10, wherein the rib element (39) comprises at least one protrusion (40), protruding from the rib element (39).

12. The covering element (30) according to one of the preceding claims, wherein the at least one opening is a slot or an oblong hole.

13. An ultrasonic dental tool (1), wherein a covering element (30) according to one of the preceding claims is attached to the ultrasonic dental tool (1), wherein the dental tool (1) preferably comprises a stop element for stopping the translational mounting movement (M) of the covering element (30) during a mounting process of the covering element (30).

14. A method for checking a wear of a tool tip (20) and/or sterilizing the tool tip (20), comprising:
- attaching the covering element (30) of the claims 1 to 12 to the tool tip (20) or a handpiece (8) having a tool tip (20),
- checking a wear of a tool tip (20) and/or sterilizing the tool tip (20).

## Patentansprüche

1. Abdeckelement (30) zum Schutz einer zahnmedizinischen Instrumentenspitze (20), insbesondere zum Schutz einer nadelartigen Instrumentenspitze, wie beispielsweise einer geraden Scalerspitze eines zahnmedizinischen Ultraschallinstruments (1), wobei die Instrumentenspitze (20) zur zahnmedizinischen Behandlung an einem Handstück (8) anbringbar ist oder Teil des Handstücks (8) ist, wobei das Abdeckelement (30) von der Instrumentenspitze (20) und/oder dem Handstück (8) abnehmbar ist und wobei das Abdeckelement (30) an der Instrumentenspitze (20) oder einem Teil des Handstücks (8) in einem montierten Zustand angebracht ist (30), wobei das Abdeckelement (30) umfasst
- einen Abdeckabschnitt (31) zum Abdecken der Instrumentenspitze (20) im montierten Zustand des Abdeckelements (30) und
- einen Befestigungsabschnitt (32) zum Befestigen des Abdeckelements (30) an der Instrumentenspitze (20) und/oder einem Teil des Handstücks (8) im montierten Zustand,
wobei der Abdeckabschnitt (31) einen Fensterabschnitt (33) für eine Sichtbarkeit auf die Instrumentenspitze (20) zum Prüfen einer Abnutzung der Instrumentenspitze (20) und zum Fluten eines Innenraums des Abdeckelements (30) mit einem Fluid, insbesondere mit einem Sterilisationsmittel, umfasst,
**dadurch gekennzeichnet, dass** für eine Seitenansicht auf die Instrumentenspitze der Fensterabschnitt (33) in eine Seitenwand des Abdeckabschnitts (31) integriert ist und dass der Fensterabschnitt (33) mindestens eine Öffnung in einer Seitenwand des Abdeckabschnitts (31) zum Fluten des Innenraums des Abdeckelements (30) mit einem Fluid, insbesondere einem Sterilisationsmittel, umfasst.

2. Abdeckelement (30) gemäß Anspruch 1, wobei das Abdeckelement (30) so konfiguriert ist, durch eine translatorische Befestigungsbewegung (M) über die Instrumentenspitze (20) gezogen zu und wobei das Abdeckelement (30) insbesondere so konfiguriert ist, dass es am Ende der Befestigungsbewegung (M) eine kraftschlüssige Verbindung zwischen dem Befestigungsabschnitt (32) und der Instrumentenspitze (20) und/oder einem Teil des Handstücks (8) ausbildet.

3. Abdeckelement (30) nach Anspruch 2, wobei das Abdeckelement (30) ein Anschlagelement aufweist, um die translatorische Befestigungsbewegung (30) am Ende des Befestigungsprozesses zu begrenzen.

4. Abdeckelement (30) gemäß einem der vorhergehenden Ansprüche, wobei das Abdeckelement (30) so konfiguriert ist, dass es durch eine translatorische Lösebewegung (R), insbesondere ohne Drehung, und/oder durch eine translatorische Lösebewegung (R) in einer Richtung, die zum distalen Ende (6) der Instrumentenspitze (20) ausgerichtet ist, entfernt werden kann.

5. Abdeckelement (30) gemäß einem der vorhergehenden Ansprüche, wobei der Abdeckabschnitt (31) aus einem ersten Material und der Befestigungsabschnitt (32) aus einem zweiten Material hergestellt ist, wobei sich das erste Material und das zweite Material voneinander unterscheiden.

6. Abdeckelement (30) gemäß einem der vorhergehenden Ansprüche, wobei der Abdeckabschnitt (31) eine vordere Seitenöffnung (36) aufweist.

7. Abdeckelement (30) gemäß einem der vorhergehenden Ansprüche, wobei der Befestigungsabschnitt (32) einen Aufnahmebereich (38) zum Aufnehmen eines Teils oder des Handstücks (8) während der Befestigungsbewegung (M) aufweist.

8. Abdeckelement (30) gemäß einem der vorhergehenden Ansprüche, wobei der Abdeckabschnitt (31) eine Referenz (34) zum Prüfen des Verschleißes der Gerätespitze (20) aufweist.

9. Abdeckelement (30) gemäß einem der vorhergehenden Ansprüche, wobei der Befestigungsabschnitt (32) eine zumindest teilweise trichterförmige Innenseite aufweist.

10. Abdeckelement (30) gemäß einem der vorhergehenden Ansprüche, wobei der Befestigungsabschnitt (32) mindestens ein Rippenelement (39) umfasst, das von einer Innenseite des Befestigungsabschnitts (32) hervorsteht.

11. Das Abdeckelement (30) gemäß Anspruch 10, wobei das Rippenelement (39) zumindest einen Vorsprung (40) umfasst, der von dem Rippenelement (39) hervorragt.

12. Abdeckelement (30) gemäß einem der vorhergehenden Ansprüche, wobei die zumindest eine Öffnung ein Schlitz oder ein Langloch ist.

13. Zahnmedizinisches Ultraschallinstrument (1), wobei ein Abdeckelement (30) gemäß einem der vorhergehenden Ansprüche an dem zahnmedizinischen Ultraschallinstrument (1) angebracht ist, wobei das zahnmedizinische Instrument vorzugsweise ein Anschlagelement zum Begrenzen der translatorischen Befestigungsbewegung (M) des Abdeckelements (30) während eines Befestigungsprozesses des Abdeckelements (30) umfasst.

14. Verfahren zur Verschleißprüfung einer Instrumentenspitze (20) und/oder zum Sterilisieren der Instrumentenspitze (20), umfassend:
- Befestigung des Abdeckelements (30) gemäß den Ansprüchen 1 bis 12 an der Instrumentenspitze (20) oder einem Handstück (8) mit einer Instrumentenspitze (20),
- Verschleißprüfung einer Instrumentenspitze (20) und/oder Sterilisierung der Instrumentenspitze (20).

## Revendications

1. Élément de recouvrement (30) destiné à protéger une pointe d'outil dentaire (20), en particulier pour protéger une pointe d'outil en forme d'aiguille, telle qu'une pointe de détartreur droite d'un outil dentaire à ultrasons (1), la pointe d'outil (20) pouvant être attachée à une pièce à main (8) pour le traitement dentaire ou faisant partie de la pièce à main (8),
dans lequel l'élément de recouvrement (30) est amovible de la pointe d'outil (20) et/ou de la pièce à main (8), et l'élément de recouvrement (30) est fixé à la pointe d'outil (20) ou à une partie de la pièce à main (8) à l'état monté, l'élément de recouvrement (30) comprenant :
- une portion de recouvrement (31) pour recouvrir la pointe d'outil (20) à l'état monté de l'élément de recouvrement (30), et
- une portion de fixation (32) pour fixer l'élément de recouvrement (30) à la pointe d'outil (20) et/ou à une partie de la pièce à main (8) à l'état monté,
sachant que la portion de recouvrement (31) comprend une portion formant fenêtre (33) pour une vue sur la pointe d'outil (20) afin de contrôler l'usure de la pointe d'outil (20) et pour remplir un espace intérieur de l'élément de recouvrement (30) avec un fluide, en particulier avec un agent de stérilisation,
**caractérisé en ce que**, pour une vue latérale sur la pointe d'outil, la portion formant fenêtre (33) est incorporée dans une paroi latérale de la portion de recouvrement (31) et **en ce que** la portion formant fenêtre (33) présente au moins une ouverture dans la portion de recouvrement (31) pour remplir l'espace intérieur de l'élément de recouvrement (30) avec un fluide, en particulier avec un agent de stérilisation.

2. Élément de recouvrement (30) selon la revendication 1,
dans lequel l'élément de recouvrement (30) est conçu pour être tiré sur la pointe d'outil (20) par un mouvement de montage en translation (M), et
en particulier, l'élément de recouvrement (30) est conçu pour établir une liaison par ajustement serré entre la portion de fixation (32) et la pointe d'outil (20) et/ou une partie de la pièce à main (8) à la fin du mouvement de montage (M).

3. Élément de recouvrement (30) selon la revendication 2,
dans lequel l'élément de recouvrement (30) comprend un organe d'arrêt pour arrêter le mouvement de montage en translation (M) à la fin d'un processus de montage.

4. Élément de recouvrement (30) selon l'une des revendications précédentes, dans lequel l'élément de recouvrement (30) est conçu pour être amovible par un mouvement de retrait en translation (R), en particulier sans rotation, et/ou par un mouvement de retrait en translation (R) dans une direction dirigée vers l'extrémité distale (6) de la pointe d'outil (20).

5. Élément de recouvrement (30) selon l'une des revendications précédentes, dans lequel la portion de recouvrement (31) est réalisée en un premier matériau et la portion de fixation (32) est réalisée en un deuxième matériau, le premier matériau et le deuxième matériau étant différents l'un de l'autre.

6. Élément de recouvrement (30) selon l'une des revendications précédentes, dans lequel la portion de recouvrement (31) présente une ouverture frontale (36).

7. Élément de recouvrement (30) selon l'une des revendications précédentes, dans lequel la portion de fixation (32) présente une zone de réception (38) destinée à recevoir une partie ou la pièce à main (8) pendant le mouvement de montage (M).

8. Élément de recouvrement (30) selon l'une des revendications précédentes, dans lequel la portion de recouvrement (31) comprend un repère (34) pour contrôler l'usure de la pointe d'outil (20).

9. Élément de recouvrement (30) selon l'une des revendications précédentes, dans lequel la portion de fixation (32) présente une face intérieure au moins partiellement en forme d'entonnoir.

10. Élément de recouvrement (30) selon l'une des revendications précédentes, dans lequel la portion de fixation (32) comprend au moins un élément formant nervure (39) qui dépasse d'une face intérieure de la portion de fixation (32).

11. Élément de recouvrement (30) selon la revendication 10,
dans lequel l'élément formant nervure (39) comprend au moins une saillie (40) qui dépasse de l'élément formant nervure (39).

12. Élément de recouvrement (30) selon l'une des revendications précédentes, dans lequel ladite au moins une ouverture est une fente ou un trou oblong.

13. Outil dentaire à ultrasons (1),
dans lequel un élément de recouvrement (30) selon l'une des revendications précédentes est attaché à l'outil dentaire à ultrasons (1),
l'outil dentaire (1) comprenant de préférence un organe d'arrêt pour arrêter le mouvement de montage en translation (M) de l'élément de recouvrement (30) pendant un processus de montage de l'élément de recouvrement (30).

14. Procédé pour contrôler l'usure d'une pointe d'outil (20) et/ou pour stériliser la pointe d'outil (20), consistant à :
- attacher l'élément de recouvrement (30) selon les revendications 1 à 12 à la pointe d'outil (20) ou à une pièce à main (8) comportant une pointe d'outil (20),
- contrôler l'usure d'une pointe d'outil (20) et/ou stériliser la pointe d'outil (20).
